(19) Europäisches Patentamt / European Patent Office / Office européen des brevets

(11) **EP 2 757 256 A2**

(12) **EUROPEAN PATENT APPLICATION**

(43) Date of publication:
**23.07.2014   Bulletin 2014/30**

(51) Int Cl.:
*F03D 7/02* (2006.01)   *F03D 7/04* (2006.01)

(21) Application number: **14151670.8**

(22) Date of filing: **17.01.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority:  **22.01.2013   US 201313746550**

(71) Applicant: **General Electric Company**
**Schenectady, New York 12345 (US)**

(72) Inventors:
• **Perley, Thomas Franklin**
  **Greenville, South Carolina 29615-4614 (US)**
• **Gerber, Brandon Shane**
  **DF 01210 Mexico City (MX)**

(74) Representative: **Bedford, Grant Richard**
**GPO Europe**
**GE International Inc.**
**The Ark**
**201 Talgarth Road**
**Hammersmith**
**London W6 8BJ (GB)**

(54) **Wind turbine and method for adjusting rotor blade pitch angle in wind turbines**

(57) Wind turbines 10 and methods for adjusting pitch angles of rotor blades 22 in wind turbines 10 are provided. A method includes monitoring 100 an operational value of the wind turbine, and providing 102 the operational value to a controller 26, the controller 26 utilizing a proportional integral derivative control algorithm to adjust the pitch angle. The method further includes adjusting 106 a gain factor for the proportional integral derivative control algorithm to a first gain value when the operational value is within a first operational region, and adjusting 110 a gain factor for the proportional integral derivative control algorithm to a second gain value when the operational value is within a second operational region. The second gain value is different from the first gain value, and the second operational region is different from the first operational region.

FIG. —4—

**Description**

The present disclosure relates generally to wind turbines, and more particularly to methods and apparatus for adjusting pitch angles of rotor blades in wind turbines.

Wind power is considered one of the cleanest, most environmentally friendly energy sources presently available, and wind turbines have gained increased attention in this regard. A modem wind turbine typically includes a tower, generator, gearbox, nacelle, and a rotor including one or more rotor blades. The rotor blades capture kinetic energy from wind using known foil principles and transmit the kinetic energy through rotational energy to turn a shaft coupling the rotor blades to a gearbox, or if a gearbox is not used, directly to the generator. The generator then converts the mechanical energy to electrical energy that may be deployed to a utility grid.

During operation of a wind turbine, various components of the wind turbine are subjected to various loads due to the aerodynamic wind loads acting on the blade. In particular, the rotor blades experience significant loading, and frequent changes in loading, during operation due to interaction with the wind. Changes in wind speed and direction, for example, may modify the loads experienced by the rotor blades. To reduce rotor blade loading, various methods and apparatus have been developed to enable pitching of the rotor blades during operation. Pitching generally allows the rotor blades to shed a portion of the loads experienced thereby.

Such methods and apparatus for pitching rotor blades typically utilized controllers which determine appropriate pitch angles for the rotor blades based on operating conditions. Various control algorithms may be utilized in the controllers, such as proportional integral derivative ("PID") control algorithms. However, known algorithms utilized to determine appropriate pitch angles have a variety of disadvantages. For example, the gain factors utilized in the various equations in PID control algorithms typically must be selected to balance competing interests, namely, the responsiveness of the pitch adjustment system and the amount of work that the pitch adjustment system performs. Lower gains reduce the amount of work, thus reducing the risk of damage to the system, but also reduce the responsiveness of the system, thus resulting in higher extreme loads that the system cannot adequately respond to. Higher gains increase the responsiveness of the system, thus resulting in lower extreme loads, but also increase the amount of work, thus increasing the risk of damage to the system.

Accordingly, improved methods and apparatus for adjusting the pitch angles of rotor blades in wind turbines are desired in the art. Specifically, methods and apparatus that allow for specific tailoring of the pitch adjustment system controller and associated control algorithm for varying operating conditions would be advantageous.

Various aspects and advantages of the invention will be set forth in part in the following description, or may be clear from the description, or may be learned through practice of the invention.

In one embodiment, the present disclosure is directed to a method for adjusting a pitch angle of a rotor blade in a wind turbine. The method includes monitoring an operational value of the wind turbine, and providing the operational value to a controller, the controller utilizing a proportional integral derivative control algorithm to adjust the pitch angle. The method further includes adjusting a gain factor for the proportional integral derivative control algorithm to a first gain value when the operational value is within a first operational region, and adjusting a gain factor for the proportional integral derivative control algorithm to a second gain value when the operational value is within a second operational region. The second gain value is different from the first gain value, and the second operational region is different from the first operational region.

In another embodiment, the present disclosure is directed to a wind turbine. The wind turbine includes a tower, a nacelle mounted to the tower, and a rotor coupled to the nacelle, the rotor comprising a hub and a plurality of rotor blades. The wind turbine further includes a generator, and a plurality of pitch adjustment mechanisms, each of the plurality of pitch adjustment mechanisms coupled to one of the plurality of rotor blades. The wind turbine further includes a controller in operable communication with one of the plurality of pitch adjustment mechanisms, the controller utilizing a proportional integral derivative control algorithm. The controller is configured to adjust a gain factor for the proportional integral derivative control algorithm to a first gain value when an operational value of the wind turbine is within a first operational region. The controller is further configured to adjust a gain factor for the proportional integral derivative control algorithm to a second gain value when the operational value is within a second operational region. The second gain value is different from the first gain value, and the second operational region is different from the first operational region.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:

FIG. 1 is a perspective view of a wind turbine according to one embodiment of the present disclosure;

FIG. 2 illustrates a perspective, internal view of a nacelle of a wind turbine according to one embodiment of the present disclosure;

FIG. 3 is a block diagram illustrating a proportional integral derivative control algorithm according to one embodiment of the present disclosure;

FIG. 4 is a block diagram illustrating a method for adjusting a pitch angle of a rotor blade according to one embodiment of the present disclosure;

FIG. 5 is a graph illustrating changes in an operational value over time according to one embodiment of the present disclosure;

FIG. 6 is a graph illustrating changes in a gain factor based on changes in an operational value according to one embodiment of the present disclosure;

FIG. 7 is a graph illustrating changes in a gain factor based on changes in an operational value according to another embodiment of the present disclosure;

FIG. 8 is a graph illustrating changes in a gain factor based on changes in an operational value according to another embodiment of the present disclosure;

FIG. 9 is a graph illustrating changes in a gain factor based on changes in an operational value according to another embodiment of the present disclosure; and

FIG. 10 is a graph illustrating changes in a gain factor based on changes in an operational value according to another embodiment of the present disclosure.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

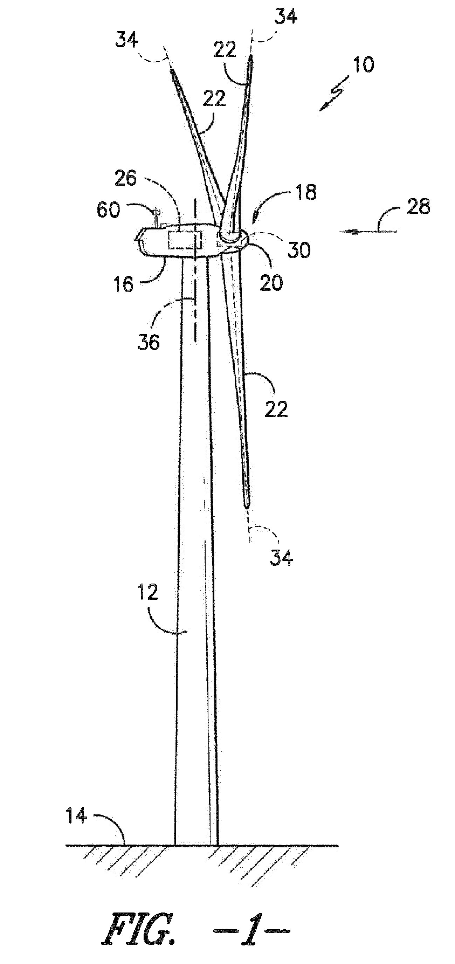

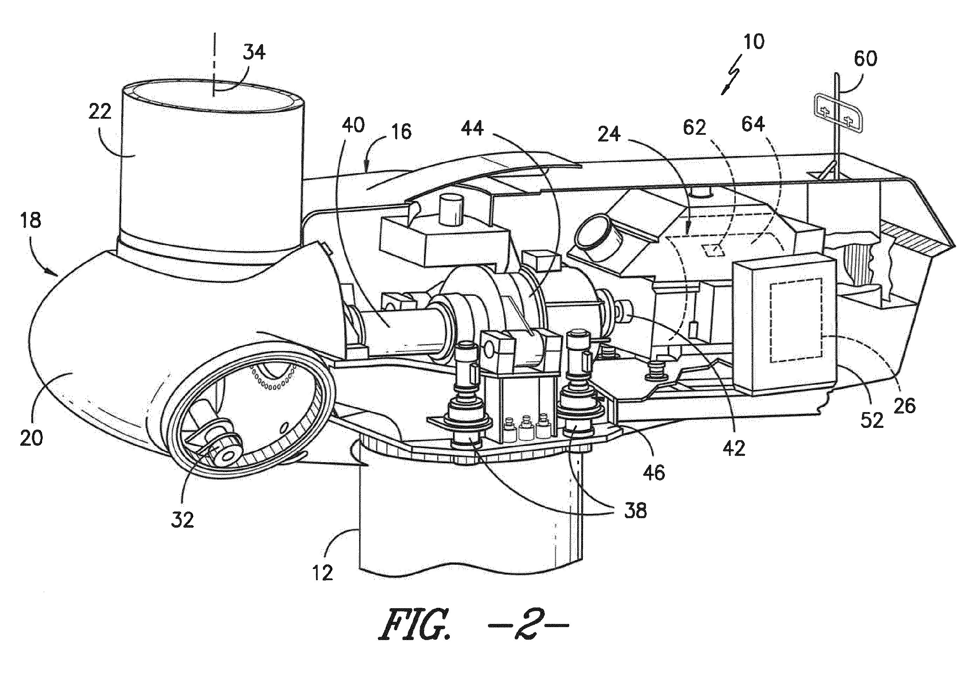

FIG. 1 illustrates a perspective view of one embodiment of a wind turbine 10. As shown, the wind turbine 10 includes a tower 12 extending from a support surface 14, a nacelle 16 mounted on the tower 12, and a rotor 18 coupled to the nacelle 16. The rotor 18 includes a rotatable hub 20 and at least one rotor blade 22 coupled to and extending outwardly from the hub 20. For example, in the illustrated embodiment, the rotor 18 includes three rotor blades 22. However, in an alternative embodiment, the rotor 18 may include more or less than three rotor blades 22. Each rotor blade 22 may be spaced about the hub 20 to facilitate rotating the rotor 18 to enable kinetic energy to be transferred from the wind into usable mechanical energy, and subsequently, electrical energy. For instance, the hub 20 may be rotatably coupled to an electric generator 24 (FIG. 2) positioned within the nacelle 16 to permit electrical energy to be produced.

As shown, the wind turbine 10 may also include a turbine control system or a turbine controller 26 centralized within the nacelle 16. However, it should be appreciated that the turbine controller 26 may be disposed at any location on or in the wind turbine 10, at any location on the support surface 14 or generally at any other location. The turbine controller 26 may generally be configured to control the various operating modes (e.g., start-up or shut-down sequences) and/or components of the wind turbine 10. For example, the controller 26 may be configured to control the blade pitch or pitch angle of each of the rotor blades 22 (i.e., an angle that determines a perspective of the rotor blades 22 with respect to the direction 28 of the wind) to control the loading on the rotor blades 22 by adjusting an angular position of at least one rotor blade 22 relative to the wind. For instance, the turbine controller 26 may control the pitch angle of the rotor blades 22, either individually or simultaneously, by transmitting suitable control signals/commands to various pitch drives or pitch adjustment mechanisms 32 (FIG. 2) of the wind turbine 10. Specifically, the rotor blades 22 may be rotatably mounted to the hub 20 by one or more pitch bearing(s) (not illustrated) such that the pitch angle may be adjusted by rotating the rotor blades 22 about their pitch axes 34 using the pitch adjustment mechanisms 32. Further, as the direction 28 of the wind changes, the turbine controller 26 may be configured to control a yaw direction of the nacelle 16 about a yaw axis 36 to position the rotor blades 22 with respect to the direction 28 of the wind, thereby controlling the loads acting on the wind turbine 10. For example, the turbine controller 26 may be configured to transmit control signals/commands to a yaw drive mechanism 38 (FIG. 2) of the wind turbine 10 such that the nacelle 16 may be rotated about the yaw axis 30.

It should be appreciated that the turbine controller 26 may generally comprise a computer or any other suitable processing unit. Thus, in several embodiments, the turbine controller 26 may include one or more processor(s) and associated memory device(s) configured to perform a variety of computer-implemented functions. As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) of the turbine controller 26 and/or pitch controller 30 may generally comprise memory element(s) including, but are not limited to, computer readable medium (e.g., random access memory (RAM)), computer readable nonvolatile medium (e.g., a flash memory), a floppy disk, a compact disc-read only memory (CD-ROM), a magneto-optical disk (MOD), a digital versatile disc (DVD) and/or other suitable memory elements. Such memory device(s) may generally be configured to store suitable computer-readable instructions that, when implemented by the processor(s), configure the controller 26 to perform various computer-implemented functions including, but not limited to, performing proportional integral derivative ("PID") control algorithms, including various calculations within one or more PID control loops, and various other suitable computer-implemented functions. In addition, the turbine controller 26 may also include various input/output channels for receiving inputs from sensors and/or other measurement devices and for sending control signals to various components of the wind turbine 10.

It should additionally be understood that the controller may be a singular controller or include various components, such as pitch controllers and/or yaw controllers, which communicate with a central controller for specifically controlling pitch and yaw as discussed. Additionally, the term "controller" may also encompass a combination of computers, processing units and/or related components in communication with one another.

Referring now to FIG. 2, a simplified, internal view of one embodiment of the nacelle 16 of the wind turbine 10 is illustrated. As shown, a generator 24 may be disposed within the nacelle 16. In general, the generator 24 may be coupled to the rotor 18 of the wind turbine 10 for generating electrical power from the rotational energy generated by the rotor 18. For example, the rotor 18 may include a main rotor shaft 40 coupled to the hub 20 for rotation therewith. The generator 24 may then be coupled to the rotor shaft 40 such that rotation of the rotor shaft 40 drives the generator 24. For instance, in the illustrated embodiment, the generator 24 includes a generator shaft 42 rotatably coupled to the rotor shaft 40 through a gearbox 44. However, in other embodiments, it should be appreciated that the generator shaft 42 may be rotatably coupled directly to the rotor shaft 40. Alternatively, the generator 24 may be directly rotatably coupled to the rotor shaft 40 (often referred to as a "direct-drive wind turbine").

It should be appreciated that the rotor shaft 40 may generally be supported within the nacelle by a support frame or bedplate 46 positioned atop the wind turbine tower 12. For example, the rotor shaft 40 may be supported by the bedplate 46 via a pair of pillow blocks 48, 50 mounted to the bedplate 46.

Additionally, as indicated above, the turbine controller 26 may also be located within the nacelle 16 of the wind turbine 10. For example, as shown in the illustrated embodiment, the turbine controller 26 is disposed within a control cabinet 52 mounted to a portion of the nacelle 16. However, in other embodiments, the turbine controller 26 may be disposed at any other suitable location on and/or within the wind turbine 10 or at any suitable location remote to the wind turbine 10. Moreover, as described above, the turbine controller 26 may also be communicatively coupled to various components of the wind turbine 10 for generally controlling the wind turbine and/or such components. For example, the turbine controller 26 may be communicatively coupled to the yaw drive mechanism(s) 38 of the wind turbine 10 for controlling and/or altering the yaw direction of the nacelle 16 relative to the direction 28 (FIG. 1) of the wind. Similarly, the turbine controller 26 may also be communicatively coupled to each pitch adjustment mechanism 32 of the wind turbine 10 (one of which is shown) through the pitch controller 30 for controlling and/or altering the pitch angle of the rotor blades 22 relative to the direction 28 of the wind. For instance, the turbine controller 26 may be configured to transmit a control signal/command to each pitch adjustment mechanism 32 such that one or more actuators (not shown) of the pitch adjustment mechanism 32 may be utilized to rotate the blades 22 relative to the hub 20.

As discussed, controller 26 may control pitch adjustment of the rotor blades 22. Such control is facilitated at least in part by use of a PID control algorithm. For example, the controller 26 may run a PID control loop for each individual rotor blade 22 or for a group of rotor blades 22. As is generally understood, a PID control algorithm includes a generic control loop feedback mechanism that is widely used in processing applications to calculate an "error" as the difference between a measured process value (PV) (e.g., current pitch angle) and a desired setpoint value (SP) (e.g., desired pitch angle). Thus, utilizing a PID control loop, the controller 26 may be configured to minimize the error by adjusting the process control inputs.

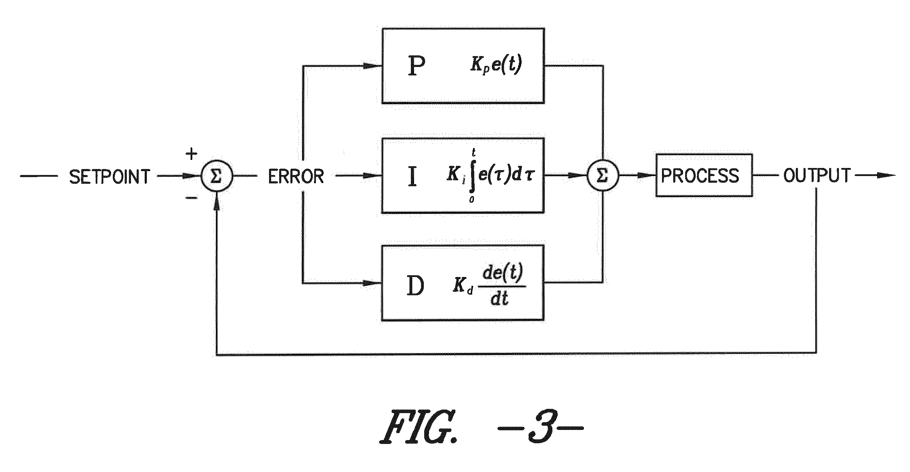

For example, FIG. 3 is a block diagram of a PID control algorithm, which is well known and need not be explained in detail herein. Generally, the PID control algorithm involves three separate parameters: the proportional (P), the integral (I), and the derivative (D) values. These values are combined to provide a controlled variable (CV) output from the PID control loop as a function of time. In the time realm, the proportional (P) value (also called "gain") makes a change to the CV output that is proportional to the current error value ($e(t)$) between the setpoint (SP) and process (PV) values multiplied by a tunable proportional gain factor $K_p$:

$$P_{\text{out}} = K_p\, e(t)$$

The integral (I) value (also called "reset") makes a change to the CV output that is proportional to the magnitude and duration of the error by integrating the error over time and multiplying the value by a tunable integral gain factor $K_i$:

$$I_{\text{out}} = K_i \int_0^t e(\tau)\, d\tau$$

The integral (I) term accelerates process towards the setpoint and eliminates the inherent steady-state error that occurs with proportional-only controllers.

The derivative (D) value (also called "rate") makes a change to the CV output as a function of the slope of the error over time multiplied by a tunable derivative gain factor $K_d$:

$$D_{\text{out}} - K_d \frac{d}{dt} e(t)$$

The derivative (D) term slows the rate of change of the controller output and reduces the magnitude of the overshoot produced by the integral (I) term.

The proportional (P), integral (I), and derivative (D) terms are summed to calculate the CV output (u(t)) of the PID controller:

$$\text{u(t)} = \text{MV(t)} = K_p e(t) + K_i \int_0^t e(\tau)\, d\tau + K_d \frac{d}{dt} e(t)$$

As discussed below, the control alogrithm is "tuned" to the specific requirements of the process by adjustment of the different gain factors (Kp, Ki, Kd) to achieve an optimum control response.

As discussed, improved methods and apparatus for adjusting the pitch angles of the rotor blades 22, which allow for specific tailoring of the controller 26 and associated control algorithm, are desired. Accordingly, the present disclosure is further directed to methods for adjusting the pitch angle of the rotor blades 22, and to wind turbines 10 that include controllers 26 capable of such operation. Such methods allow for adjustment of the gain factors utilized in the control algorithm based on operational values detected during operation of the wind turbine, such that various levels of gains can advantageously be utilized in appropriate operating conditions. For example, low gains may be utilized in operating conditions wherein the risk of excessive rotor blade 22 loading is low, high gains may be utilized in operating conditions wherein the risk of excessive rotor blade 22 loading is high, and medium gains may be utilized in operating conditions wherein the risk of excessive rotor blade 22 loading is medium.

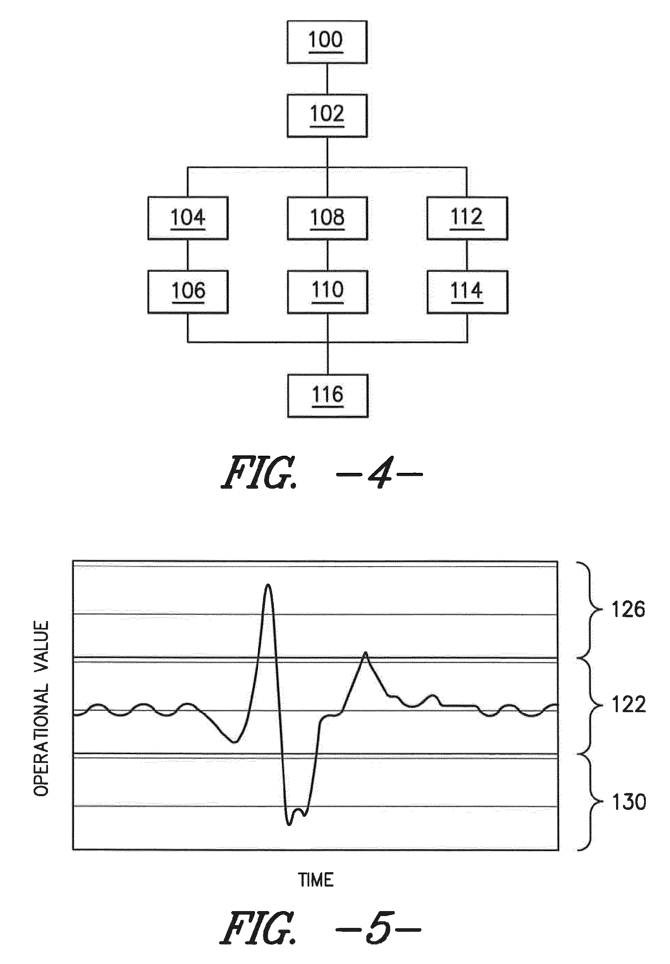

A method according to the present disclosure may include, for example, monitoring one or more operational values of the wind turbine 10, as shown in step 100 of FIG. 4. Suitable operational values include, for example, wind speed, wind direction, turbulence intensity, generator rotor speed, generator rotor acceleration, and load signals generated during wind turbine 10 operation (which may be generated due to, for example, wind speed, wind direction, turbulence intensity, etc.). Other suitable operational values, such as other suitable weather conditions and/or other suitable operating conditions of various wind turbine components, may additionally be utilized. Various sensors may be utilized to provide such monitoring of operational values. For example, FIG. 2 illustrates a weather sensor 60 and an accelerometer 62. Suitable weather sensors 60 include, for example, Light Detection and Ranging ("LIDAR") devices, Sonic Detection and Ranging ("SODAR") devices, anemometers, wind vanes, barometers, and radar devices (such as Doppler radar devices). Such weather sensors 60 are capable of monitoring various operational values related to weather conditions, such as wind speed, wind direction, and turbulence intensity. As further shown in FIG. 2, an accelerometer 62 is mounted to a rotor 64 of the generator 24. The accelerometer 62 is thus capable of monitoring generator rotor acceleration. Other suitable sensors may be utilized to monitor other suitable operational values, as desired or required.

As shown in step 102 of FIG. 4, a method according to the present disclosure may further include providing the operational values to the controller 26. For example, the various sensors utilized to monitor the operational values may be in communication with the controller 26, such as through a wired or wireless communication, and may so provide such operational values.

As discussed, the controller 26 may utilize PID algorithms to adjust the pitch angle of the various rotor blades 22. A method according to the present disclosure may thus include adjusting one or more gain factors Kp, Ki, Kd based on the operational values. For example, each operational value, and changes thereto, may be correlated with the risk of excessive rotor blade 22 loading. The gain factors Kp, Ki, Kd can then be adjusted based on changes in the operational values such that suitable gain factors Kp, Ki, Kd are utilized that are appropriate for the associated risk of excessive rotor blade 22 loading. It should be understood that gain factors according to the present disclosures are multipliers utilized as discussed above in PID algorithms. It should further be understood that gain values, as discussed below, are numerical values utilized as gain factors in the PID algorithms.

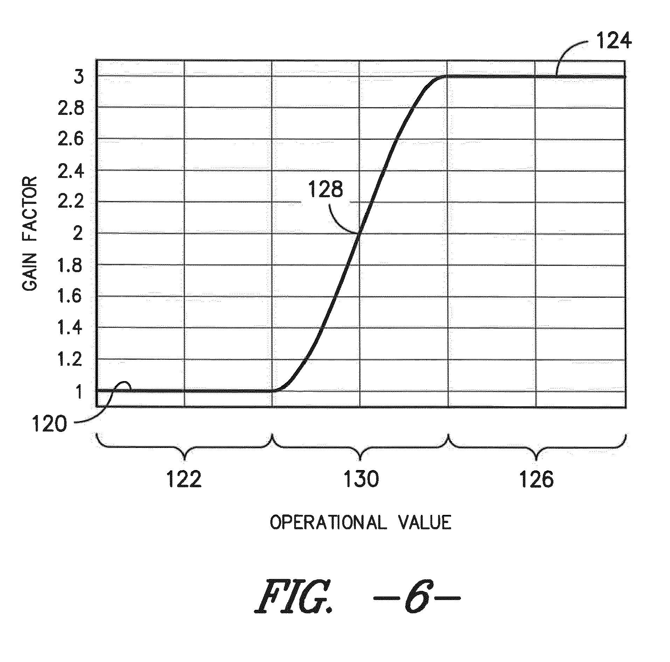

For example, as shown in FIG. 4, a method according to the present disclosure may include adjusting one or more gain factors Kp, Ki, Kd to respective first gain values 120, as shown in step 106, when one or more operational values are within first operational regions 122, as shown in step 104. FIG. 5, for example, illustrates a graph of an operational value during a set exemplary time period. As shown, during various time periods, an operational value, which in the graphical representation is rotor 64 acceleration, is within a first operational region 122. The first operational region 122 is a region correlated with generally low risk of excessive rotor blade 22 loading, and is typically a region that encompasses operational levels during normal steady operation of the wind turbine 10. FIG. 6 illustrates a graph of changes in gain factor based on changes in operational value. As shown, according to the present disclosure, when an operational value is within the first operational region 122, a gain factor may be adjusted to and remain at a first gain value 120.

In some embodiments as shown, the first gain value 120 may be 1. Alternatively, however, any suitable value above or below 1 may be utilized as a first gain value 120.

As further shown in FIG. 4, a method according to the present disclosure may include adjusting one or more gain factors Kp, Ki, Kd to respective second gain values 124, as shown in step 110, when one or more operational values are within second operational regions 126, as shown in step 108. The second gain values 124 are different from the associated first gain values 120, and the second operational regions 126 are different from than the associated first operational regions 122. In some embodiments the second gain values 124 may be greater than the associated first gain values 120, while in other embodiments the second gain values 124 may be less than the associated first gain values 120. Similarly, in some embodiments the second operational region 126 may be greater than the associated first operational region 126, while in other embodiments the second operational region 126 may be less than the associated first operational region 126. FIG. 5, for example, illustrates a graph of an operational value during a set exemplary time period. As shown, during various time periods, an operational value, which in the graphical representation is rotor 64 acceleration, is within a second operational region 126. The second operational region 126 is a region correlated with generally high risk of excessive rotor blade 22 loading. In the graph shown, the second operational region 126 is a region that encompasses levels of high rotor 64 acceleration. FIG. 6 illustrates a graph of changes in gain factor based on changes in operational value. As shown, according to the present disclosure, when an operational value is within the second operational region 126, a gain factor may be adjusted to and remain at a second gain value 124.

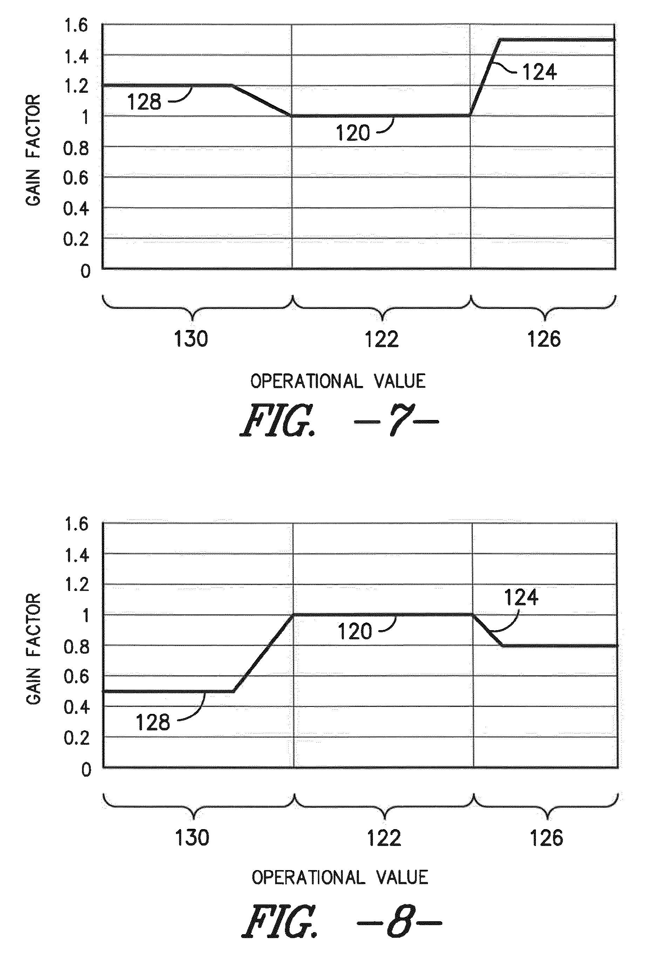

In FIGS. 5 and 6, the second gain value 124 is greater than the associated first gain value 120, and the second operational region 126 is greater than the first operational region 122. FIGS. 7 through 10 illustrate other various embodiments. In some embodiments as shown, the second gain value 124 may be a second gain value range. The second gain value 124 range may extend from the first gain value 120, such as from a value just above or below the first gain value 120, and may further in some embodiments include the first gain value 120, such that a generally continuous plot of gain values is provided. Alternatively, however, the second gain value 124 may be any suitable value or range of values.

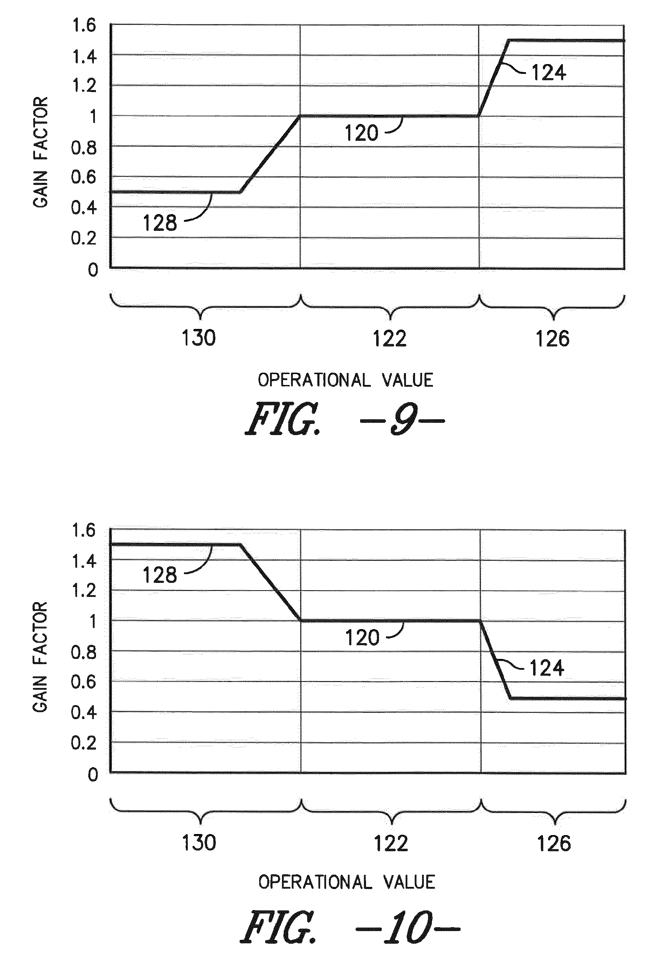

In some embodiments, as shown in FIGS. 7 and 9, the second gain value 124 or gain value 124 range is greater than the first gain value 120. In other embodiments, as shown in FIGS. 8 and 10, the second gain value 124 or gain value 124 range is less than the first gain value 120. While the embodiments as shown in FIGS. 7 through 10 illustrate the second operational region 126 as greater than the first operational region 122, it should be understood that in other embodiments, the second operational region 126 may be less than the first operational region 122.

In some embodiments as shown, the second gain value 124 may be between approximately 2 and approximately 4. Alternatively, however, any suitable value above approximately 4 or below approximately 2 may be utilized as a second gain value 124.

As further shown in FIG. 4, a method according to the present disclosure may in some embodiments further include adjusting one or more gain factors Kp, Ki, Kd to respective third gain values 128, as shown in step 114, when one or more operational values are within third operational regions 130, as shown in step 112. The third gain values 128 are different from the associated first gain values 120, and may further be different from the associated second gain values 124. The third operational regions 130 are different from the associated first operational regions 122 and second operational regions 126. In some embodiments, the third gain values 128 may be less than the associated first gain values 120, while in other embodiments, the third gain values 128 may be greater than the associated first gain values 120. Further, in some embodiments, the third gain values 128 may be less than the associated second gain values 124, while in other embodiments, the third gain values 128 may be greater than the associated second gain values 124. Similarly, in some embodiments, the third operational regions 130 may be less than the associated first operational regions 122, while in other embodiments, the third operational regions 130 may be greater than the associated first operational regions 122 and less than the associated second operational regions 126, while in still other embodiments, the third operational regions 130 may be greater than the associated second operational regions 126. FIG. 5, for example, illustrates a graph of an operational value during a set exemplary time period. As shown, during various time periods, an operational value, which in the graphical representation is rotor 64 acceleration, is within a third operational region 130. The third operational region 130 is a region correlated with generally medium risk of excessive rotor blade 22 loading. In the graph shown, the third operational region 130 is a region that encompasses levels of high rotor 64 deceleration. FIG. 6 illustrates a graph of changes in gain factor based on changes in operational value. As shown, according to the present disclosure, when an operational value is within the third operational region 130, a gain factor may be adjusted to and remain at a third gain value 128.

In some embodiments, the third gain value 128 may be a third gain value range, as shown in FIGS. 6 through 10. In some embodiments as shown in FIG. 6, the third gain value 128 range may extend between the first gain value 120 and the second gain value 124, such as from a value just above the first gain value 120 to a value just below the second gain value 120, and may further in some embodiments include the first and second gain values 120, 124, such that a generally continuous plot of gain values is provided. In other embodiments, as shown in FIGS. 7 through 10, the third gain value 128 range may extend from the first gain value 120 such as from a value just above or below the first gain value 120, and may further in some embodiments include the first gain value 120, such that a generally continuous plot of gain values is provided. Alternatively, however, the third gain value 128 may be any suitable value or range of values.

In FIGS. 5 and 6, the third gain value 128 or gain value 128 range is greater than the associated first gain value 120 and less than the second gain value 124, and the third operational region 130 is greater than the first operational region 122 and less than the second operational region 126. In other embodiments, as shown in FIGS. 7 and 10, the third gain value 128 or gain value 128 range is greater than the first gain value 120. Further, in FIG. 7, the third gain value 128 range is less than the second gain value 124 range, while in FIG. 10, the third gain value 128 or gain value 128 range is greater than the second gain value 124 or gain value range 124. In other embodiments, as shown in FIGS. 8 and 9, the third gain value 128 or gain value 128 range is less than the first gain value 120. Further, in FIG. 8, the third gain value 128 range is less than the second gain value 124 range, while in FIG. 9, the third gain value 128 or gain value 128 range are less than the second gain value 124 or gain value 124 range. While the embodiments as shown in FIGS. 8 through 9 illustrate the third operational region 130 as less than the first operational region 122, it should be understood that in other embodiments, the third operational region 130 may be greater than the first operational region 122 and, optionally, the second operational region 126.

It should additionally be understood that the first gain values, as well as any other suitable gain values, may be single values or ranges of values, as desired or required.

It should further be understood that the present disclosure is not limited to three gain values and operational regions, and rather that any suitable number or values and regions is within the scope and spirit of the present disclosure.

It should be noted that a gain factor utilized in a method according to the present disclosure may be a proportional gain factor Kp, an integral gain factor Ki, or a derivative gain factor Kd.

In exemplary embodiments, a method according to the present disclosure may further include adjusting a pitch angle of one or more rotor blades 22, as shown as step 116 of FIG. 4 and as discussed above.

The present disclosure is further directed to a controller 26 that utilizes a PID control algorithm, and to a wind turbine 10 utilizing such controller 26. The controller 26 according to the present disclosure may be configured to adjust one or more gain factors Kp, Ki, Kd to first gain values 120 when operational values are within first operational regions 122, to second gain values 124 when operational values are within second operational regions 126, and optionally to third gain values 128 when operational values are within third operational regions 130, as discussed above. The controller 26 may be in operable communication with one or more pitch adjustment mechanisms 32, and may thus be operable to pitch one or more rotor blades 22 as desired or required.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:

1. A method for adjusting a pitch angle of a rotor blade in a wind turbine, the method comprising:

monitoring an operational value of the wind turbine;

providing the operational value to a controller, the controller utilizing a proportional integral derivative control algorithm to adjust the pitch angle;

adjusting a gain factor for the proportional integral derivative control algorithm to a first gain value when the operational value is within a first operational region; and

adjusting a gain factor for the proportional integral derivative control algorithm to a second gain value when the operational value is within a second operational region, wherein the second gain value is different from the first gain value and the second operational region is different from the first operational region.

2. The method of clause 1, wherein the second gain value is greater than the first gain value, and wherein the second operational region is greater than the first operational region.

3. The method of any preceding clause, wherein the second gain value is a second gain value range, the second gain value range extending from the first gain value.

4. The method of any preceding clause, further comprising adjusting a gain factor for the proportional integral derivative control algorithm to a third gain value when the operational value is within a third operational region, wherein the third gain value is different from the first gain value and the third operational region is different from the first operational region and the second operational region.

5. The method of any preceding clause, wherein the third gain value is greater than the first gain value and less than the second gain value, and wherein the third operational region is less than the first operational region.

6. The method of any preceding clause, wherein the third gain value is a third gain value range, the third gain value range extending between the first gain value and the second gain value.

7. The method of any preceding clause, wherein the gain factor is a proportional gain factor.

8. The method of any preceding clause, wherein the gain factor is an integral gain factor.

9. The method of any preceding clause, wherein the gain factor is a derivative gain factor.

10. The method of any preceding clause, wherein each of the adjusting steps comprises adjusting each of a plurality of gain factors.

11. The method of any preceding clause, wherein the first gain value is 1.

12. The method of any preceding clause, wherein the second gain value is between approximately 2 and approximately 4.

13. The method of any preceding clause, wherein the operational value is an acceleration value for a generator rotor of the wind turbine.

14. The method of any preceding clause, further comprising adjusting the pitch angle.

15. A wind turbine, comprising:

a tower;

a nacelle mounted to the tower;

a rotor coupled to the nacelle, the rotor comprising a hub and a plurality of rotor blades;

a generator;

a plurality of pitch adjustment mechanisms, each of the plurality of pitch adjustment mechanisms coupled to one of the plurality of rotor blades;

a controller in operable communication with one of the plurality of pitch adjustment mechanisms, the controller utilizing a proportional integral derivative control algorithm, the controller configured to adjust a gain factor for the proportional integral derivative control algorithm to a first gain value when an operational value of the wind turbine is within a first operational region, the controller further configured to adjust a gain factor for the proportional integral derivative control algorithm to a second gain value when the operational value is within a second operational region, wherein the second gain value is different from the first gain value and the second operational region is different from the first operational region.

16. The wind turbine of any preceding clause, wherein the second gain value is a second gain value range, the second gain value range extending from the first gain value.

17. The wind turbine of any preceding clause, the controller further configured to adjust a gain factor for the proportional integral derivative control algorithm to a third gain value when the operational value is within a third operational region, wherein the third gain value is different from the first gain value and the third operational region is different from the first operational region and the second operational region.

18. The wind turbine of any preceding clause, wherein the third gain value is a third gain value range, the third gain value range extending between the first gain value and the second gain value.

19. The wind turbine of any preceding clause, wherein the operational value is an acceleration value for a rotor of the generator.

20. The wind turbine of any preceding clause, wherein the controller is in operable communication with each of the plurality of pitch adjustment mechanisms.

**Claims**

1. A method for adjusting a pitch angle of a rotor blade (22) in a wind turbine (10), the method comprising:

    monitoring (100) an operational value of the wind turbine (10);
    providing (102) the operational value to a controller (26), the controller (26) utilizing a proportional integral derivative control algorithm to adjust the pitch angle;
    adjusting (106) a gain factor for the proportional integral derivative control algorithm to a first gain value when the operational value is within a first operational region; and
    adjusting (110) a gain factor for the proportional integral derivative control algorithm to a second gain value when the operational value is within a second operational region, wherein the second gain value is different from the first gain value and the second operational region is different from the first operational region.

2. The method of claim 1, wherein the second gain value is greater than the first gain value, and wherein the second operational region is greater than the first operational region.

3. The method of any preceding claim, wherein the second gain value is a second gain value range, the second gain value range extending from the first gain value.

4. The method of any preceding claim, further comprising adjusting a gain factor for the proportional integral derivative control algorithm to a third gain value when the operational value is within a third operational region, wherein the third gain value is different from the first gain value and the third operational region is different from the first operational region and the second operational region.

5. The method of any preceding claim, wherein the third gain value is greater than the first gain value and less than the second gain value, and wherein the third operational region is less than the first operational region.

6. The method of claim 4 or claim 5, wherein the third gain value is a third gain value range, the third gain value range extending between the first gain value and the second gain value.

7. The method of any preceding claim, wherein the gain factor is a proportional gain factor.

8. The method of any preceding claim, wherein the gain factor is an integral gain factor.

9. The method of any preceding claim, wherein the gain factor is a derivative gain factor.

10. The method of any preceding claim, wherein each of the adjusting steps comprises adjusting each of a plurality of gain factors.

11. The method of any preceding claim, wherein the first gain value is 1.

12. The method of any preceding claim, wherein the second gain value is between approximately 2 and approximately 4.

13. The method of any preceding claim, wherein the operational value is an acceleration value for a generator rotor of the wind turbine (10).

14. The method of any preceding claim, further comprising adjusting the pitch angle.

15. A wind turbine (10), comprising:

a tower (12);
a nacelle (16) mounted to the tower;
a rotor (18) coupled to the nacelle, the rotor comprising a hub and a plurality of rotor blades (22);
a generator (26);
a plurality of pitch adjustment mechanisms (30), each of the plurality of pitch adjustment mechanisms coupled to one of the plurality of rotor blades (22);
a controller (26) in operable communication with one of the plurality of pitch adjustment mechanisms, the controller utilizing a proportional integral derivative control algorithm, the controller (26) configured to adjust a gain factor for the proportional integral derivative control algorithm to a first gain value when an operational value of the wind turbine is within a first operational region, the controller (26) further configured to adjust a gain factor for the proportional integral derivative control algorithm to a second gain value when the operational value is within a second operational region, wherein the second gain value is different from the first gain value and the second operational region is different from the first operational region.

FIG. -1-

FIG. -2-

EP 2 757 256 A2

*FIG.* —3—

FIG. —4—

FIG. —5—

FIG. -6-

*FIG. -7-*

*FIG. -8-*

FIG. -9-

FIG. -10-